# EUROPEAN PATENT APPLICATION

(11) **EP 4 488 533 A1**
(43) Date of publication of application: **08.01.2025**
(21) Application number: 23183369.0
(22) Date of filing: 04.07.2023
(51) Int. Cl.: F16B 33/02

(54) **MUTUALLY SCREWED ASSEMBLY FOR AN AIR TREATMENT DEVICE FOR A VEHICLE**

(71) Applicant: KNORR-BREMSE Systeme für Nutzfahrzeuge GmbH, 80809 München (DE)
(72) Inventor: TOTH, Zoltan Laszlo, 6100 Kiskunfélegyháza (HU); PALICSKA, Domonkos, 6000 Kecskemét (HU); OLAH, Tibor, 6000 Kecskemét (HU)

(57) **Abstract**

The present invention relates to a mutually screwed assembly (100) comprising:

- at least one first part (102) comprising at least one screw protrusion (128) with at least one first screw thread profile (104) comprising at least one loaded flank (110) and at least one non-loaded flank (112), and

- at least one second part (114) comprising at least one screw hole (134) with at least one second screw thread profile (116) comprising at least one loaded flank (122) and at least one non-loaded flank (124);

wherein the loaded flank and/or the non-loaded flank of the first and or second screw thread profile are/is tilted, at least axially, towards a central axis and/or an axial end of the screw hole (134) and/or the screw protrusion (128).

## Description

The present invention relates to a mutually screwed assembly for an air treatment device for a vehicle, in particular utility vehicle, comprising, inter alia, at least one first part with at least one first screw thread profile and at least one second part with at least one second screw thread profile, wherein in a mounted and/or tightened state, the first part and the second part are connected to each other via the first screw thread profile and the second screw thread profile.

Further, the present invention relates to an air dryer device comprising at least one first screw thread profile as mentioned above and relates also to an air dryer cartridge comprising at least one second screw thread profile as mentioned above.

Besides, the present invention also relates to a vehicle, in particular utility vehicle, with at least one assembly as mentioned above and/or at least one air dryer device as mentioned above and/or at least one air dryer cartridge as mentioned above.

In the field of vehicles in general and especially utility or commercial vehicles, usually pneumatic systems are used for brakes, suspension and other auxiliary systems, wherein the distribution of the air is handled by a multi-circuit protection valve that can divide the air provided by a compressor or the like, handle the different opening and closing pressures and the pressure limitation of each circuits and the circuit protection.

Before the pressurized air may be controlled this way, an important measure is to dry this air (as it still contains humidity of the atmosphere) provided by the compressor by means of an air dryer device and an air dryer cartridge mounted thereon (usually by a screw connection).

A connection between an air dryer cartridge and an air dryer device needs to provide a fluid-tight, in particular air-tight seal and high connection strength to absorb the forces due to high pressure inside the system. Due to the high connection strength, the screw connection between these first and second parts is subjected to high mechanical stresses resulting in an increased wear of this screw connection.

A further aspect relates to the geometry of the screw connection of the first and second part according to which threaded connection elements are used, which can be screwed into each other, thereby providing such a fluid-tight connection together with further sealing elements. In usual designs, a metric or otherwise standardized ISO thread profile can be used to secure compatibility and simple combination of different types of connection elements.

Different types of these first and second parts can be used for different applications. One challenge is to make sure that the right type of first part (that may be established as an air dryer cartridge) is provided for the respective application. For example, normal or oil separator cartridges (OSC) can be provided as well as cartridges for different pressure levels etc. Also, the same or similar cartridge designs can be used, since the connection is standardized. Another challenge may be to prevent the usage of counterfeit cartridges.

Such screw connection systems between a first and a second part of an air treatment device or system are already known in the prior art.

The teaching of WO2016193775 A1 is directed to a thread connection between a filter cartridge and its base, as well as to a filter cartridge comprising such a thread. The thread of this teaching is designed to increase the cohesion force of the assembly as long as a ripping out force is increasing. In other words, the cohesion force is increased proportionally to the increase of the ripping out force. The ripping out force may be a pressure internal to the cartridge or the bowl containing the cartridge. However, any external force which tends to dissociate the threaded parts of the assembly is considered as a ripping out force.

As the cohesion force of the thread design is increased proportionally to the increase of the ripping out force caused by internal pressure and its related pressure pulsations, the mechanical stresses (such as surface pressure in the loaded flanks as well as shear stresses and bending stresses in the crest portions) are increasing significantly thus resulting in a higher wear and fatigue of the hole thread connection in the prior art.

It is therefore an object of the present invention to improve a mutually screwed assembly as mentioned above, in particular with respect to user-friendliness, security of the connection and adaptability to different applications as well as a reduction of wear and fatigue in the first and second screw thread profiles.

This object is solved according to the present invention with a mutually screwed assembly according to the features of claim 1. Correspondingly, a mutually screwed assembly for an air treatment device for a vehicle, in particular utility vehicle, is provided, wherein this assembly comprises:
- at least one first part with at least one first screw thread profile having a plurality of crest portions and a plurality of root portions, wherein each crest portion comprises at least one loaded flank and at least one non-loaded flank, and
- at least one second part with at least one second screw thread profile having a plurality of crest portions and a plurality of root portions, wherein each crest portion comprises at least one loaded flank and at least one non-loaded flank; wherein,

in a mounted and/or tightened state, the first part and the second part are connected to each other via the first screw thread profile and the second screw thread profile;
wherein the first part comprises at least one first main body having at least one screw protrusion at which the first screw thread profile is formed, particularly as an external screw thread profile, wherein the second part comprises at least one second main body having at least one screw hole in which the second screw thread profile is formed, particularly as an internal screw thread profile; and wherein the screw protrusion comprises a central axis and at least one axial end facing away from the first main body, wherein the loaded flank and/or the non-loaded flank of the first thread profile are/is tilted, at least axially, towards the central axis and/or this axial end, and/or wherein the screw hole comprises a central axis and at least one axial end formed on at least one surface region of the second main body, wherein the loaded flank and/or the non-loaded flank of the second thread profile are/is tilted, at least axially, towards the central axis and/or this axial end.

The invention is based on the basic idea that the loaded flank and/or the non-loaded flank of the first and second thread profile are/is tilted (or inclined), at least axially, towards the respective axial ends of the screw protrusion on the one hand and the screw hole on the other hand. As, during operation, the first and second thread profile are subjected to high external loads or forces such as the internal pressure of the air treatment system as well as pressure pulsation/vibrations, partial, substantially elastic, deformations of the first and second thread profile are the consequences. The inclination of the loaded flank and/or the non-loaded flank of the first and/or second thread profile as described above results in a reduced contact pressure of the loaded flanks of the crest portions of the first and second screw thread profiles as the crest portions, due to the external forces/loads, deform each in a direction pointing away from each other. Therefore, mechanical stresses (such as surface pressure in the loaded flanks as well as shear stresses and bending stresses in the crest portions) in the first and second screw thread profiles, in particular in the crest portions, are reduced such that a lower wear and fatigue of each thread connection may be provided. Especially, the loaded flank and the non-loaded flank of the first thread profile may be tilted, at least axially, towards the axial end of the screw protrusion and additionally, the loaded flank and the non-loaded flank of the second thread profile may be also inclined, at least axially, towards the axial end of the screw hole.

Further, in a mounted and/or tightened state, the loaded flank of a crest portion of the first screw thread profile and the adjacent loaded flank of a crest portion of the second screw thread profile may form at least one mutual flank contact area; and wherein the non-loaded flank of a crest portion of the first screw thread profile and the adjacent non-loaded flank of a crest portion of the second screw thread profile limiting a flank gap. Due to the flank gap, the deformation behavior of the crest portions may be improved as these portions may deform in a direction whose direction vector points away from the mutual flank contact area and towards the flank gap such that the crest portion may deform elastically into the corresponding flank gaps. The dimension of each flank gap should be understood such that it exceeds such a flank gap resulting out of the usual form tolerances and/or positional tolerances of the first and second screw thread profile.

Further it is conceivable that at least one deformation, in particular elastic deformation, of a crest portion of the first screw thread profile and/or a crest portion of the second screw thread profile caused by at least one additional external force and/or load with regard to the first screw thread profile and/or second screw thread profile is reduced compared to the mounted and/or tightened state only. The mounted and/or tightened state could be understood as such an initial state at which the screwed assembly is tightened with the necessary tightening torque such that the required pretension between the first and second screw thread profile is reached. The elastic deformation results from the external force mainly coming from the internal pressure and pressure pulsations acting permanently on the mutually screwed assembly in general and the first and second screw thread profile specifically. Due to the deformation behavior as mentioned above, the elastic deformation caused by the pretension of the tightening torque of at least one loaded crest portion is reduced as the external force acts against this pretension direction such that less wear, fatigue and stresses occur within the crest portions of the first and second screw thread profile (at least in the most loaded one, two or three first crest portions).

The loaded flanks and the non-loaded flanks of the first screw thread profile and/or of the second screw thread profile may be each aligned, at least partially, in parallel. This alignment allows an easier manufacture process of the first and second screw thread profile. Additionally, the geometry of the flank gap may be established in an easy manner such that the deformation behavior may be improved.

It is further thinkable that the first screw thread profile is formed as a buttress-like screw thread profile and the second screw thread profile is formed as a buttress-like thread profile. This type of profile may allow the first and second screw thread profile to have a lower friction and withstand greater external forces and/or loads. Another advantage is the easier manufacture process compared to other screw thread profiled.

The first screw thread profile may be configured essentially reversed to the second screw thread profile. This configuration may allow an optimized engagement between the first and second screw thread profile resulting in a higher and more defined pretension accuracy as well as a more precise configuration of the flank contact area such that the wear and stress of the loaded flanks may be decreased.

In addition, the loaded flank of the first and second screw thread profile each may comprise at least one even section being larger than at least one even section of each non-loaded flank of the first and second screw thread profile. Due to the larger even section of the loaded flanks, an optimized design may be established such that the flank contact area may be increased resulting in reduced wear and stress (in particular the surface pressure) of the loaded flanks. Thus, the mounting and operation security may be enhanced.

A crest portion of the second thread profile comprises at least one free crest end at which at least one non-rounded edge may be formed, and a crest portion of the first thread profile also comprises at least one free crest end at which at least one even end section may be formed. The non-rounded edge may bay one end of a chamfer that may be provided at the crest having the advantage that the second screw thread profile is also compatible with a standard ISO and/or metric screw thread profile. This configuration may be especially advantageous for wear parts (such as air dryer cartridges for example) that have to be changed in regular intervals since the mounting variety and the mounting pairings with the first part may be increased. On the other hand, as the free crest end of the crest portion of the first screw thread profile may have an even end section (that may be parallel to the central axis of the first screw thread profile), no such compatible establishment with a standard ISO and/or metric screw thread profile may be provided having the advantage that a counterfeit second part (such as a counterfeit air dryer cartridge for example) may not be paired with the first part.

Consequently, the first part may be formed as at least one air dryer device. Thus, the second part may be formed as at least one air dryer cartridge. As mentioned before, this configuration of the first and second part increase the variety of use for the air dryer cartridge (as an original part) on the one hand while the compatibility of the air dryer device with a standard ISO and/or metric screw thread profile may not be provided resulting in a more effective counterfeit protection as now the air dryer device may not be paired with a counterfeit air dryer cartridge having an ISO or other standardized screw thread profile.

Further, the present invention also relates to an air dryer device comprising at least one first main body having at least one screw protrusion and at least one first screw thread profile as mentioned above. The advantages and technical teachings as discussed with regard to the first main body having at least one screw protrusion and at least one first screw thread profile as mentioned above are also transferable to the air dryer device accordingly.

Additionally, the present invention relates to an air dryer cartridge comprising at least one second main body having at least one screw hole and at least one second screw thread profile as mentioned above. The advantages and technical teachings as discussed with regard to the second main body having at least one screw hole and at least one second screw thread profile are also transferable to the air dryer cartridge accordingly.

Also, the present invention relates to a vehicle, in particular utility vehicle, with at least one assembly and/or at least one air dryer device and/or at least one air dryer cartridge as mentioned above. The advantages and technical teachings as discussed with regard to the at least one assembly and/or at least one air dryer device and/or at least one air dryer cartridge are also transferable to the vehicle accordingly.

Further details and advantages of the present invention shall now be disclosed in an embodiment according to the invention in connection with the drawings.

It is shown in
- Fig. 1: a first schematic and cross-sectional view of a first embodiment of a mutually screwed assembly according to the invention; and
- Fig. 2: a second schematic and cross-sectional view of the first embodiment of the mutually screwed assembly according to Fig. 1.

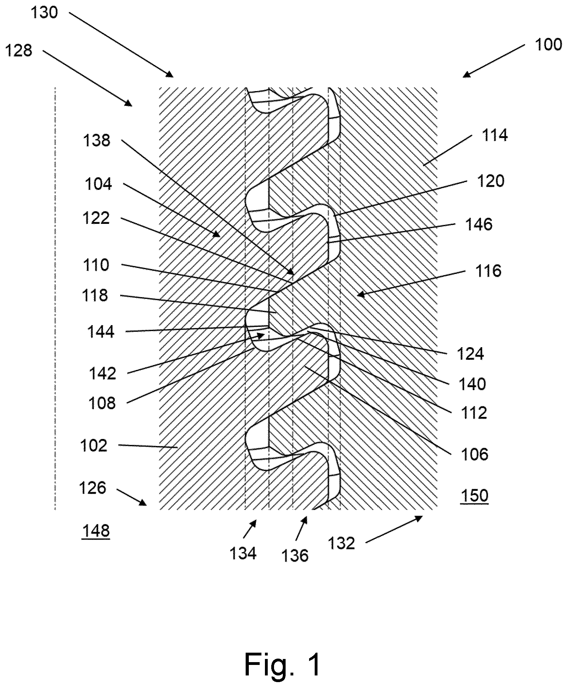

**Fig. 1** shows a first schematic and cross-sectional view of a first embodiment of a mutually screwed assembly 100 according to the invention.

The mutually screwed assembly 100 is formed as a mutually screwed assembly for an air treatment device for a utility vehicle.

This assembly 100 comprises a first part 102 and a second part 114.

The first part 102 is formed as an air dryer device 148.

The second part 114 is formed an air dryer cartridge 150.

The first part 102 comprises a first screw thread profile 104 and the second part 114 comprises a second screw thread profile 116.

Further, the first part 102 comprises a first main body 126 having a screw protrusion 128 at which the first screw thread profile 104 is formed as an external screw thread profile.

The screw protrusion 128 comprises a central axis (as shown by the left dashed line in Fig. 1) and an axial end 130 facing away from the first main body 126.

Accordingly, the second part 114 comprises a second main body 132 having a screw hole 134 formed therein in which the second screw thread profile 116 is formed as an internal screw thread profile.

The screw hole 134 comprises also a central axis (as shown by the left dashed line in Fig. 1) and an axial end 136 formed at a surface region of the second main body 132.

The central axes of the screw protrusion 128 and screw hole 134 are aligned coaxially in a mounted and tightened state of the mutually screwed assembly 100.

As can be depicted in Fig. 1, in this mounted and tightened state, the first part 102 in the form of air dryer device 148 and the second part 114 in the form of an air dryer cartridge 150 are connected to each other via the first screw thread profile 104 and the second screw thread profile 116.

The first screw thread profile 104 has a plurality of crest portions 106 and a plurality of root portions 108.

As can be depicted by Fig. 1, substantially four crest portions 106 and three root portions 108 are shown, wherein more or less than four crest portions 106 and more or less than three root portions 108 may be provided but not less than two crest portions 106 and one root portion 108.

Each crest portion 106 of the first screw thread profile 106 comprises a loaded flank 110 and a non-loaded flank 112.

Accordingly, the second screw thread profile 116 also has a plurality of crest portions 118 and a plurality of root portions 120.

As can be depicted by Fig. 1, substantially three crest portions 118 and four root portions 120 are shown, wherein more or less than three crest portions 118 and more or less than four root portions 108 may be provided but not less than two crest portions 118 and one root portion 120.

Each crest portion 118 of the second screw thread profile 116 comprises a loaded flank 122 and a non-loaded flank 124.

Each loaded flank 110 and each non-loaded flank 112 of the first screw thread profile 104 is tilted axially (in the direction of the central axis) towards the axial end 130 of the screw protrusion 128.

In other words, each loaded flank 110 and each non-loaded flank 112 encloses an inclination angle between these flanks and the central axis being larger than 0° and smaller than 90°.

Also, each crest portion 106 (with regard to its central axis not shown in Fig. 1) of the first screw thread profile 104 is tilted axially (in the direction of the central axis) towards the axial end 130 of the screw protrusion 128.

So, each crest portion 106 also encloses an inclination angle between this crest portion 106 and the central axis being larger than 0° and smaller than 90°.

Further, each of the loaded flanks 110 and the non-loaded flanks 112 of the first screw thread profile 104 are each aligned, at least partially, in parallel, wherein the same appears with the crest portions 106.

Each loaded flank 110 of the first screw thread profile 104 comprises an even section being larger than an even section of each non-loaded flank 112 of the first screw thread profile 104.

Each of the crest portions 106 of the first screw thread profile 104 comprises a free crest end at which an even end 146 or end section is formed.

This free crest end of each crest portion 106 is arranged between the loaded flank 110 and the non-loaded flank 112 with regard to a perimeter of the crest portion 106 of the first screw thread profile 104.

The even end 146 or end section is aligned in parallel with regard to the central axis of the screw protrusion 128 and is connected to the loaded flank 110 and the non-loaded flank 112 via crest end radius.

In addition, each loaded flank 122 and non-loaded flank 124 of the second screw thread profile 116 is tilted (or inclined) axially (in the direction of the central axis ) towards the axial end 136 of the screw hole 134.

In other words, each loaded flank 122 and each non-loaded flank 124 encloses an inclination angle between these flanks and the central axis being larger than 0° and smaller than 90°.

Also, each crest portion 118 (with regard to its central axis not shown in Fig. 1) of the second screw thread profile 116 is tilted axially (in the direction of the central axis) towards the axial end 136 of the screw hole 134.

So, each crest portion 118 also encloses an inclination angle between this crest portion 118 and the central axis being larger than 0° and smaller than 90°.

In addition, each of the loaded flanks 122 and the non-loaded flanks 124 of the second screw thread profile 116 are each aligned, at least partially, in parallel, wherein the same appears with the crest portions 118.

Each loaded flank 122 of the second screw thread profile 116 comprises an even section being larger than an even section of each non-loaded flank 124 of the second screw thread profile 116.

Each of the crest portions 118 of the second screw thread profile 116 comprises a free crest end 142 at which a non-rounded edge 144 is formed.

The free crest end 142 of each crest portion 118 is arranged between the loaded flank 122 and the non-loaded flank 124 with regard to a perimeter of this crest portion 118.

The non-rounded edge 144 divides the free crest end 142 into a first end section being aligned in parallel with regard to the central axis of the screw hole 134 and into a second end section being tilted in a direction towards the non-loaded flank 124.

Further, in the mounted and/or tightened state, the loaded flank 110 of a crest portion 106 of the first screw thread profile 104 and the adjacent loaded flank 122 of a crest portion 118 of the second screw thread profile 116 form a mutual flank contact area 138.

And, the non-loaded flank 112 of a crest portion 106 of the first screw thread profile 104 and the adjacent non-loaded flank 124 of a crest portion 118 of the second screw thread profile 116 limit (or define) a flank gap 140.

The dimension of each flank gap 140 exceeds such a flank gap resulting from of the usual form tolerances and/or positional tolerances of the first and second screw thread profile 104, 116 of other usual screw thread profiles. For example the flank gap (e.g. non-contact area may have dimension between 0.01 mm to 3 mm).

As it is also shown in Fig. 1, the first screw thread profile 104 is formed as a buttress-like screw thread profile and the second screw thread profile 116 is also formed as a buttress-like thread profile.

Also, the first screw thread profile 104 is configured essentially reversed to the second screw thread profile 116.

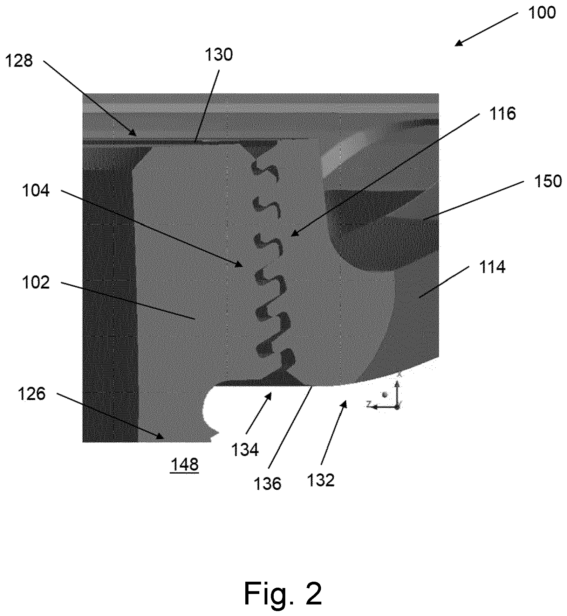

**Fig. 2** shows a second schematic and cross-sectional view of the first embodiment of the mutually screwed assembly 100 according to Fig. 1.

According to this Fig. 2, a deformation behaviour of the second main body 132 of the air dryer cartridge 150 is shown in with a deformation factor of 25 due to an external load or force (as an internal pressure in the air dryer cartridge 150 or pressure pulsations).

As can be understood by this Fig. 2, an elastic deformation of each crest portion of the first screw thread profile 104 and each crest portion of the second screw thread profile 116 (see Fig. 1) caused by the additional external force or forces and load or loads (with regard to the first screw thread profile 104 and second screw thread profile 116) is reduced compared to the mounted and tightened state only.

The mounted and tightened state could be understood as such an initial state at which the screwed assembly 100 is tightened with the necessary tightening torque such that the required internal pretension between the first and second screw thread profile 104, 116 is reached resulting in an initial or internal elastic deformation of the corresponding crest portions (see Fig. 1).

The additional elastic deformation results from the external force mainly coming from the internal pressure and pressure pulsations acting permanently on the mutually screwed assembly 100 in general and the first and second screw thread profile 104, 116 specifically.

Due to the deformation behaviour especially of the second main body 132 as mentioned above, the initial or internal elastic deformation caused by the pretension of the tightening torque of a loaded crest portions 106, 118 (see Fig. 1) is reduced as the external force acts against this pretension direction such that less wear, fatigue and stresses occur within the crest portions 106, 118 of the first and second screw thread profile 104, 116 (at least in the most loaded one, two or three first crest portions 106, 118).

Further, the present invention relates to an air dryer device 148 comprising a first main body 126 having a screw protrusion 128 and a first screw thread profile 104 as mentioned with regard to Fig. 1.

The advantages and technical teachings as discussed with regard to the first main body having a screw protrusion 128 and a first screw thread profile 104 as mentioned above are also transferable to air dryer device accordingly.

Also, the present invention relates to an air dryer cartridge 150 comprising a second main body 132 having a screw hole 134 and a second screw thread profile 116 as mentioned with regard to Fig. 1.

The advantages and technical teachings as discussed with regard to the second main body 132 having a screw hole 134 and a second screw thread profile 116 are also transferable to the air dryer cartridge accordingly.air dryer cartridge 150.

Additionally, the present invention relates to a utility vehicle (not shown in Fig. 2) with at an assembly 100 and an air dryer device 148 and an air dryer cartridge 150 as mentioned with regard to Fig. 1.

The advantages and technical teachings as discussed with regard to the assembly 100 and the air dryer device 148 and the air dryer cartridge 150 are also transferable to the utility vehicle accordingly.

### REFERENCE SIGNS

- 100: Assembly
- 102: First part
- 104: First screw thread profile
- 106: Crest portion
- 108: Root portion
- 110: Loaded flank
- 112: Non-loaded flank
- 114: Second part
- 116: Second screw thread profile
- 118: Crest portion
- 120: Root portion
- 122: Loaded flank
- 124: Non-loaded flank
- 126: First main body
- 128: Screw protrusion
- 130: Axial end
- 132: Second main body
- 134: Screw hole
- 136: Axial end
- 138: Flank contact area
- 140: Flank gap
- 142: Free crest end
- 144: Non-rounded edge
- 146: Even end
- 148: Air dryer device
- 150: Air dryer cartridge

## Claims

1. A mutually screwed assembly (100) for an air treatment device for a vehicle, in particular utility vehicle, comprising:
- at least one first part (102) with at least one first screw thread profile (104) having a plurality of crest portions (106) and a plurality of root portions (108), wherein each crest portion (106) comprises at least one loaded flank (110) and at least one non-loaded flank (112), and
- at least one second part (114) with at least one second screw thread profile (116) having a plurality of crest portions (118) and a plurality of root portions (120), wherein each crest portion (118) comprises at least one loaded flank (122) and at least one non-loaded flank (124); wherein,
in a mounted and/or tightened state, the first part (102) and the second part (114) are connected to each other via the first screw thread profile (104) and the second screw thread profile (116); wherein the first part (102) comprises at least one first main body (126) having at least one screw protrusion (128) at which the first screw thread profile (104) is formed, particularly as an external screw thread profile, wherein the second part (114) comprises at least one second main body (132) having at least one screw hole (134) in which the second screw thread profile (116) is formed, particularly as an internal screw thread profile; and wherein the screw protrusion (128) comprises a central axis and at least one axial end (130) facing away from the first main body (126), wherein the loaded flank (110) and/or the non-loaded flank (112) of the first screw thread profile (104) are/is tilted, at least axially, towards the central axis and/or this axial end (130), and/or wherein the screw hole (134) comprises a central axis and at least one axial end (136) formed on at least one surface region of the second main body (132), wherein the loaded flank (122) and/or the non-loaded flank (124) of the second screw thread profile (116) are/is tilted, at least axially, towards the central axis and/or this axial end (136).

2. The assembly (100) according to claim 1,
**characterized in that**
, in a mounted and/or tightened state, the loaded flank (110) of a crest portion (106) of the first screw thread profile (104) and the adjacent loaded flank (122) of a crest portion (118) of the second screw thread profile (116) form at least one mutual flank contact area (138); and wherein the non-loaded flank (112) of a crest portion (106) of the first screw thread profile (104) and the adjacent non-loaded flank (124) of a crest portion (118) of the second screw thread profile (116) limiting a flank gap (140).

3. The assembly (100) according to claim 1 or claim 2,
**characterized in that**
at least one deformation, in particular elastic deformation, of a crest portion (106) of the first screw thread profile (104) and/or a crest portion (118) of the second screw thread profile (116) caused by at least one additional external force and/or load with regard to the first screw thread profile (104) and/or second screw thread profile (116) is reduced compared to the mounted and/or tightened state only.

4. The assembly (100) according to one of the preceding claims,
**characterized in that**
the loaded flanks (110) and the non-loaded flanks (112) of the first screw thread profile (104) and/or of the second screw thread profile (116) are each aligned, at least partially, in parallel.

5. The assembly (100) according to one of the preceding claims,
**characterized in that**
the first screw thread profile (104) is formed as a buttress-like screw thread profile and the second screw thread profile (116) is formed as a buttress-like thread profile.

6. The assembly (100) according to one of the preceding claims,
**characterized in that**
the first screw thread profile (104) is configured essentially reversed to the second screw thread profile (116).

7. The assembly (100) according to one of the preceding claims,
**characterized in that**
the loaded flank (110) of the first and second screw thread profile (104, 116) each comprises at least one even section being larger than at least one even section of each non-loaded flank (112) of the first and second screw thread profile (104, 116).

8. The assembly (100) according to one of the preceding claims,
**characterized in that**
a crest portion (118) of the second screw thread profile (116) comprises at least one free crest end (142) at which at least one non-rounded edge (144) is formed, and a crest portion (106) of the first screw thread profile (104) also comprises at least one free crest end at which at least one even end (146) section is formed.

9. The assembly (100) according to one of the preceding claims,
**characterized in that**
the first part (102) is formed as at least one air dryer device (148).

10. The assembly (100) according to one of the preceding claims,
**characterized in that**
the second part (114) is formed as at least one air dryer cartridge (150).

11. An air dryer device (148) comprising at least one first main body (126) having at least one screw protrusion (128) and at least one first screw thread profile (104) according to one of the claims 1 to 10.

12. An air dryer cartridge (150) comprising at least one second main body (132) having at least one screw hole (134) and at least one second screw thread profile (116) according to one of the claims 1 to 10.

13. Vehicle, in particular utility vehicle, with at least one assembly (100) according to one of the claims 1 to 10 and/or at least one air dryer device (148) according to claim 11 and/or at least one air dryer cartridge (150) according to claim 12.
